# EUROPEAN PATENT APPLICATION

(11) **EP 1 739 970 A1**
(43) Date of publication of application: **03.01.2007**
(21) Application number: 05254012.7
(22) Date of filing: 28.06.2005
(51) Int. Cl.: H04N 7/26, H04N 7/36

(54) **Method for encoding and transmission of real-time video conference data**

(71) Applicant: MATSUSHITA ELECTRIC INDUSTRIAL CO., LTD., Osaka 540-6319 (JP)
(72) Inventor: Zaharia-Rayner, Ramona c/o Panasonic Comm., Wokingham Berkshire RG40 2AQ (GB)
(74) Representative: Haley, Stephen

(57) **Abstract**

Method and apparatus for encoding video data in a real-time face-to-face communication system. A video data signal comprising frames of facial images is input. Parts of a frame of the video data signal are classified as key parts or non-key parts of a facial image to form a key group and a non-key group. Each group is divided into macro-blocks to form key macro-blocks and non-key macro-blocks. Each key macro-block is encoded with reference to at least one macro-block only in said frame to define encoded key data which is output. For each non-key macro-bock the amount of correlation between the non-key macro-block and at least one comparison macro-block in at least one preceding frame is determined. If the amount of correlation is below a threshold the non-key macro-block is encoded with reference to at least one macro-block only in said frame to define first encoded non-key data which is output. If the amount of correlation is above the threshold the non-key macro housing block is encoded with reference to its respective comparison macro-block to define a second encoded non-key data which is output. The apparatus may further comprise two buffers and buffer monitors so that the type of encoding performed depends on the occupancy of the buffers.

## Description

The present invention relates to encoding and transmission of video data in a real-time face-to-face communication system, such as in a video conferencing session on a computer network.

The major requirements for a typical video conferencing session are consistently good video quality even using a limited bandwidth, low delay and robustness to packet loss. In a video conferencing call involving audio, video and data, the video component typically consumes most of the available bandwidth for the call. There would be a much wider acceptance of video conferencing systems over low bandwidth networks if the required bandwidth for the video component part were to be significantly reduced.

The Moving Pictures Experts Group (MPEG) standards are currently used for transmission of high quality video in many applications such as video broadcasting and video conferencing. Recently, MPEG and Video Coding Experts Group (VCEG) have developed a new standard that promises to outperform the earlier MPEG-4 and H.263 standards, providing better compression of video images. Along with enhanced compression efficiency, some other features are also enhanced such as network friendly video representation for interactive (video telephony) and non-interactive (broadcast, streaming, storage, video on demand) applications. This new proposed standard H.264/AVC provides gains in compression efficiency of up to 50% over a wide range of bit rates and video resolutions compared to previous standards. Also, compared to previous standards, the decoder complexity is about four times that of MPEG-2 and two times that of MPEG-4 Visual Simple Profile.

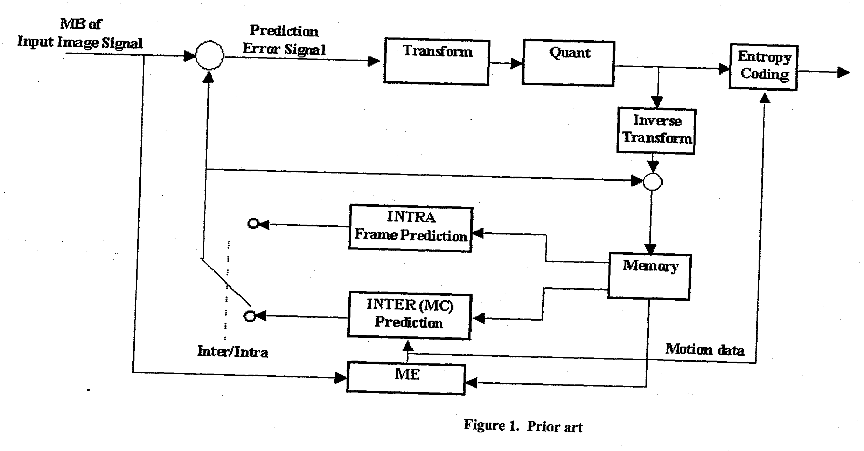

Standardized video coding techniques like H.263, H.264/AVC, MPEG-1, 2, 4 are based on hybrid video coding, as shown in figure 1. The input image is divided into macro-blocks. Each macro-block consists of the three components: Y, Cr and Cb. Y is the luminance component, which represents the brightness information. Cr and Cb represent the colour information. Due to the fact that the human eye system is less sensitive to the chrominance than to the luminance, the chrominance signals are both sub-sampled by a factor of two in the horizontal and vertical directions. Therefore, a macro-block consists of one block of 16 by 16 picture elements for the luminance component and of two blocks of 8 by 8 picture elements for the colour components.

These macro-blocks are coded in "inter" or "intra" mode. In inter mode, a macro-block is predicted using motion compensation. For motion compensated prediction a displacement vector is estimated and transmitted for each block (motion data) which refers to the corresponding position of its image signal in an already transmitted reference image stored in memory. In intra mode, former standards set the prediction signal to zero such that the image can be coded without reference to previously sent information. This is important to provide for error resilience and for entry points into the bit streams enabling random access.

The prediction error, which is the difference between the original and the predicted block, is transformed, quantized and entropy coded. In order to reconstruct the same image on the decoder side, the quantized coefficients are inverse transformed and added to the prediction signal. The result is the reconstructed macro-block that is also available at the decoder side. This macro-block is stored in a memory. Macro-blocks are typically stored in raster scan order.

Inherent in the video coding process are many mode decisions that improve one or more of the aspects in the speed-quality-bit rate tradeoff. Video standards such as MPEG and H.26L specify the bitstream syntax completely, but allow for optimizations in the encoding process in terms of algorithms and mode decisions used.

Coding standards such as the ISO MPEG series and the ITU H series allow for different kinds of coding modes for frames. However, for a real-time video communication only Intra (I) and Predictive (P) are considered. An I frame is coded in isolation from other frames using transform coding, quantization and entropy coding while a P frame is predictively coded. An I frame is often used to efficiently code frames corresponding to scene changes, i.e. frames that are different from preceding frames and cannot be easily predicted. Frames within a scene are similar to preceding frames and hence may be coded predictively as P for increased efficiency. Frames between two successive I frames, including the leading I frame, are collectively called a group of pictures (GOP). Since video sequences have variable scene durations, depending on the content, it is not possible to use a fixed GOP structure to efficiently code the video sequence. This is because the position of I frames in the sequence depends on when scene changes occur. So a mechanism is needed to efficiently decide when to code a frame as an I frame and when to code a frame as a P frame. In practice, video coding standards allow for macro-blocks (16x16 regions of the frame) in a P frame to be intra coded if they cannot be predicted efficiently. This means that even if all the frame types are set to be P, there may be many macro-blocks in each frame that are intra coded. This macro-block based mode decision may be used to account for scene changes. However coding a P frame is more computationally expensive than coding an I frame. This is because coding P frames uses motion estimation and compensation and also this additional decision for each macro-block in the frame.

H.264 adopts more modes than any other video standards. For example, in a P frame, a macro-block can be coded in the following modes: SKIP, INTER (16x16, 16x8 8x16 8x8 8x4 4x8 4x4), INTRA (4x4, 16x16). For intra modes, INTRA4x4 needs to check 9 interpolation directions and INTRA16x16 needs to check 4 interpolation directions. The encoder will examine all the modes to get the optimal one. H.264 employs a complex mode decision technique based on a rate-distortion optimization (RDO) technique to get the best result in terms of visual quality and coding rates. In order to perform RDO, the encoder encodes video by exhaustively searching for the best mode in the rate-distortion sense among various predefined modes. It calculates rate distortion cost (RDcost) of all possible modes to choose the best one having the minimum RDcost.

There are many mode decisions in the encoding process and these may be at different coding levels. For instance some mode decisions are made frame by frame while others are made on a block-by-block basis. Each of these different modes has a cost associated with it. This cost may be defined in terms of the bits, the time needed or the quality, or a combination of some of these. So the mode decision involves choosing the mode that has a smaller cost associated with it. In principle, to make the optimal decision one can try all the modes and choose the mode that has the lowest cost. However, computing the actual costs before making a decision is very computationally intensive as this involves trying every mode to determine the cost.

In order to reduce computational burden for the decision scheme in the case of face-to-face communication, the present invention identifies features that provide a good estimate of the cost for a mode, but do not require as much computation to evaluate.

According to the present invention there is provided a method of encoding video data in a real-time face-to-face communication system, the method comprising the steps of:
inputting a video data signal comprising frames of facial images;
classifying parts of a frame of the video data signal as key parts or non-key parts of a facial image to form a key group and a non-key group;
dividing each group into macro-blocks to form key macro-blocks and non-key macro-blocks;
for each key macro-block, performing key encoding, comprising encoding the key macro-block with reference to at least one macro-block only in said frame, to define encoded key data;
outputting the encoded key data;
for each non-key macro-bock, determining the amount of correlation between the non-key macro-block and at least one comparison macro-block in at least one preceding frame; and
if the amount of correlation is below a threshold correlation, performing first non-key encoding, comprising encoding the non-key macro-block with reference to at least one macro-block only in said frame, to define first encoded non-key data;
outputting the first encoded non-key data; or
if the amount of correlation is above the threshold correlation, performing second non-key encoding, comprising encoding the non-key macro-block with reference to its respective comparison macro-block, to define second encoded non-key data;
outputting the second encoded non-key data.

According to the present invention there is further provided an apparatus for encoding video data in a real-time face-to-face communication system, the apparatus comprising:
video data signal input means arranged to input, in use, frames of video data comprising facial images;
facial image classifying means arranged to classify, in use, parts of a frame of the video data signal as key parts or non-key parts of a facial image to form a key group and a non-key group;
macro-block division means arranged to divide, in use, each group into macro-blocks to form key macro-blocks and non-key macro-blocks;
an encoder arranged to encode, in use, the key and non-key macro-blocks to define encoded key and non-key data;
output means arranged to output, in use, the encoded key data and first and second encoded non-key data;
wherein fore each key macro-block the encoder performs, in use, key encoding comprising encoding the key macro-block with reference to at least one macro-block only in said frame, to define encoded key data;
wherein for each non-key macro-bock, the encoder determines, in use, the amount of correlation between the non-key macro-block and a comparison macro-block in at least one preceding frame; and
if the amount of correlation is below a threshold correlation, the encoder performs, in use, first non-key encoding, comprising encoding the non-key macro-block with reference to at least one macro-block in said frame to form second encoded non-key data; or
if the amount of correlation is above a threshold correlation, the encoder performs, in use, second non-key encoding, comprising encoding the non-key macro-block with reference to its respective comparison macro-block only to define second encoded non-key data.

Adopting an intelligent mode decision can reduce the encoding time of a video sequence. However, when video sequences are used in real time communication such as video conferencing over the internet or IP telephony, the end-to-end delay is also a critical parameter for a good quality service. Additional to the encoding delay, the end-to-end delay in video communication over a network comprises many other components such as buffering delay, communication network delay and decoding delays.

According to the present invention there is provided a method as described above, further comprising the steps of:
monitoring the occupancy of a first buffer arranged to contain, in use, packets of the encoded data;
if the occupancy of the first buffer is below a first threshold occupancy, performing the key encoding or the first non-key encoding;
packetising the first encoded key data or the first encoded non-key data to define first packets;
inputting the first packets into the first buffer;
outputting the first packets from the first buffer into a network;
if the occupancy of the first buffer is above the first threshold occupancy, monitoring the occupancy of a second buffer arranged to contain, in use, packets of the encoded data;
if the occupancy of the second buffer is below a second threshold occupancy, performing the second non-key encoding;
packetising the second encoded non-key data to define second packets;
inputting the second packets into a second buffer;
outputting the second packets into the network; and
outputting the second packets from the second buffer into the network.

According to the present invention there is further provided an apparatus as described above, further comprising:
first and second buffers, each buffer arranged to contain, in use, packets of the encoded data;
a first monitor arranged to monitor, in use, the occupancy of the first buffer if the occupancy of the buffer is below a first threshold occupancy;
a packetiser arranged to packetise, in use, the encoded data to define packets;
first input means arranged to input, in use, first packets into the first buffer;
first output means arranged to output, in use, the first packets from the first buffer into a network;
a second monitor arranged to monitor, in use, the occupancy of the second buffer, if the occupancy of the first buffer is above the first threshold occupancy;
second input means arranged to input, in use, second packets into the second buffer;
second output means arranged to output, in use second packets from the second buffer into the network;
wherein if the occupancy of the first buffer is below the first threshold occupancy the encoder performs, in use, the key encoding or the first non-key encoding and if the occupancy of the first buffer is above the first threshold occupancy and the occupancy of the second buffer is below a second threshold occupancy the encoder performs, in use, the first non-key encoding.

The present invention provides a mechanism for controlling the encoding process and avoiding buffer overflow/underflow in a real time face-to-face communication system. It has the benefit of speeding the encoding process of video data by planning in advance how particular sections of the image are encoded in a particular fashion. Moreover, an intelligent buffering mechanism is implemented which functions in accordance with the encoding choice, in order to avoid situations like over/underflow which can cause disruption in communication.

Examples of the present invention will now be described with reference to the accompanying drawings, in which:
Figure 1 is a schematic diagram of the components of a prior art video coding technique;
Figure 2 is a schematic diagram of the components of an end-to-end video communication system;
Figure 3 and figure 4 are schematic diagrams showing the components of a encoding apparatus;
Figure 5 is a schematic diagram showing finding a best match for inter encoding;
Figure 6 is a flow chart showing buffer monitoring; and
Figure 7 is a schematic diagram showing intra/inter encoding on a multi-channel network.

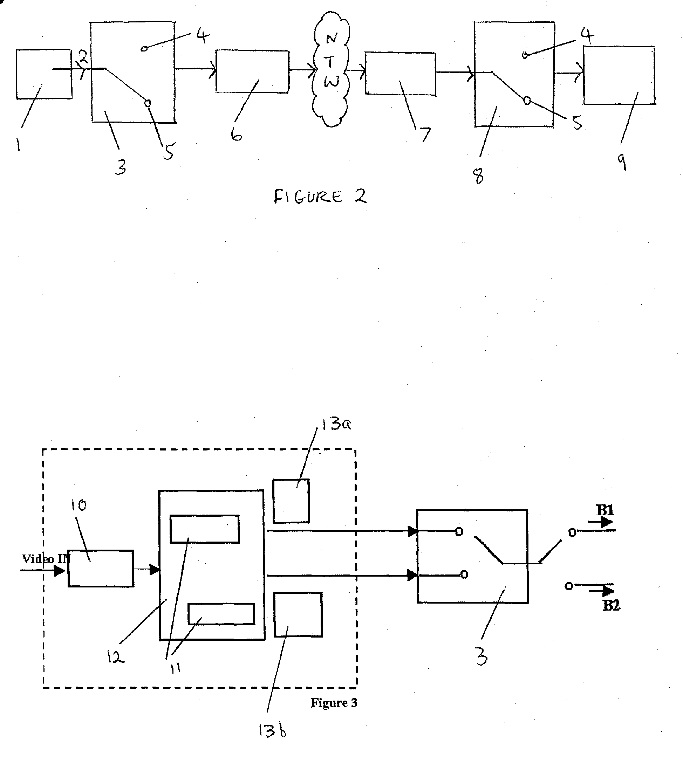

Referring to figure 2, an end-to-end video communication system comprises a camera 1 on the sender side which videos images of a person speaking. On the sender side, the video input 2 from the camera 1 is subject to a sequential compression processing by a real-time encoder 3, normally at a fixed transmission bit rate. The encoder 3 has the capability of encoding in "intra" 4 and "inter" 5 mode which will be described later. The encoded data is packetized and stored into a local buffer 6 before outputted to an IP network NTW. On the receiver side, packets from the network NTW are received by an analyser 7 in real time, reassembled and processed by a real time decoder 8, reproduced and displayed by a display system 9.

For the applications to which the present invention relates, the nature of data to be exchanged over the communication network comprises facial images of the faces of the participants to the conversation. The present invention exploits prior knowledge about facial images before encoding to reduce communication time. This prior knowledge can be that different components of the face, such as the eye region and mouth region, and the background can tolerate different levels of error because of different perceptual importance or can be that facial motions are repetitive. Therefore, to take advantage of the perceptual differences among face regions, a video frame of a facial image can be divided into the face and the background and the face further decomposed into multiple layers including the head, eye and mouth.

Referring to figure 3, the facial image is first analysed by an image analyser (layer separator) 10 and divided into key 11 and non-key 12 layers The lower layer 12 is for non-key parts of the picture, namely, portions which have very low or which do not require high resolution (e.g face skin excluding eyes and mouth, background of face image). The rapidly changing portions, e.g. lips, eyes, requiring higher resolution and having a high perceptual importance, are analysed into the key layer 11. Each layer 11, 12 is divided into macro-blocks 13a, 13b, which are then encoded.

The layer separation process can be based on an approach that uses very limited knowledge of the face (as opposed to complicated image processing face detection methods) for a fast localization of the face layers. The facial image is only decomposed into specific layers such as the key layers 11 (head, eyes, mouth) and non-key layers 12 (background and rest of the image). A simple example of decomposition can be based on approximate face position, which can be estimated easily and robustly by existing face detection techniques.

The layer separator 10 incorporates the key and non-key layer prior knowledge about faces, into a traditional waveform video coder 3 for low bit rate, such as H.26L. The encoder 3 accepts a dual input one from a key layer 11 and another one from a non-key layer 12. The encoding of each layer is performed independently with different quality according to the present invention and the method of encoding is signalled prior to the encoding process.

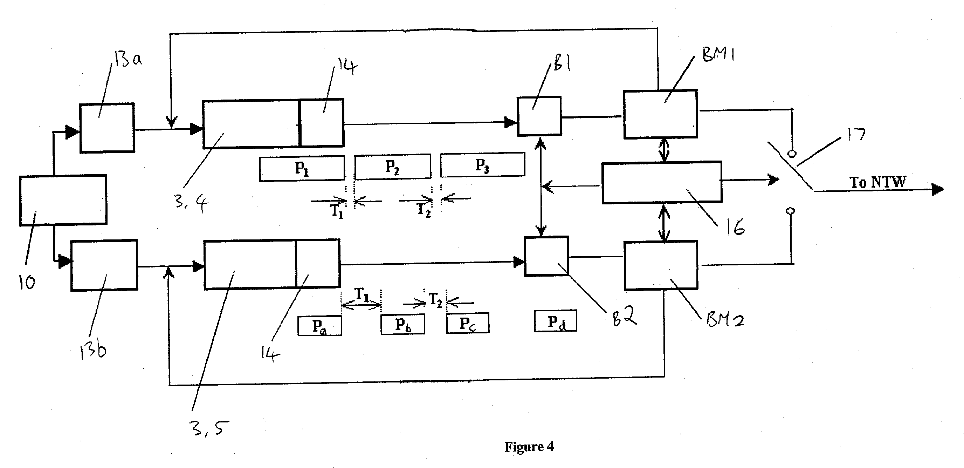

The key layers 11 are assigned with more bits and are coded with higher quality than the non-key layers. 12, which can tolerate a higher level of errors. After encoding, the compressed bit streams are encapsulated into packets P₁, P₂, Pₐ, P_{b}, ... by a packetiser 14, which are stored into a dual buffer B1 and B2 ready to be sent to the communication channel (see figure 4).

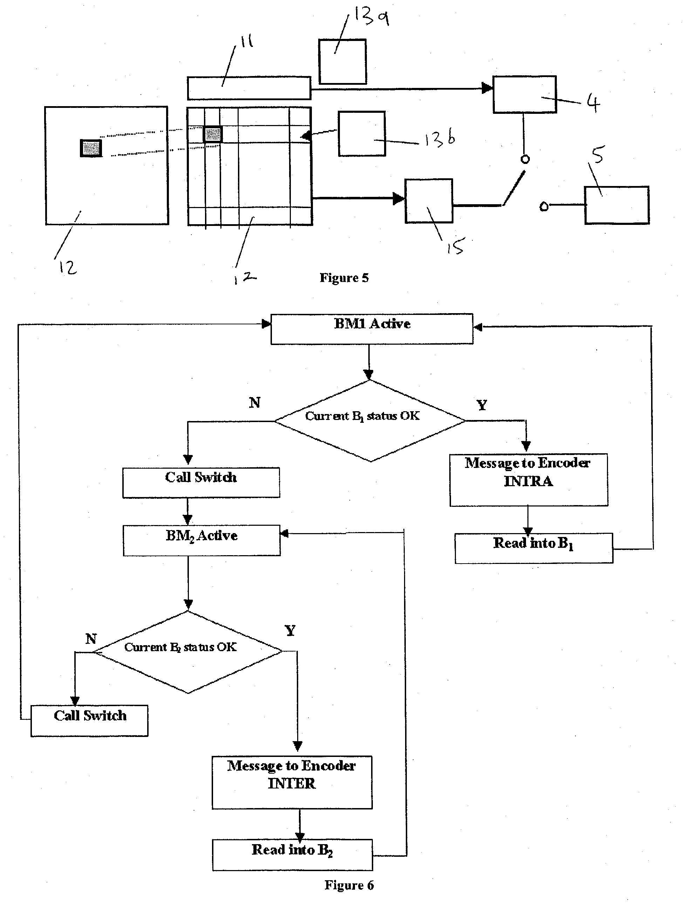

Referring to figure 5, the key layers 11 in the face image represent only a small fraction of the entire frame, but are carrying the most important information of each frame. Each key layer is divided into key macro-blocks 13a, which are encoded in "intra' mode 4. This means the macro-blocks are coded independently, i.e. spatially and with no reference to the temporal relationship with macro-blocks in previous frame. Therefore no reference frame is required. They are then DCT transformed, entropy encoded, packetised and sent to buffer B1.

Again referring to figure 5, the non-key layers 12 in the facial image represent a larger fraction of the entire frame. Each non-key layer 12 is divided into non-key macro-blocks 13b which are encoded in "inter" mode. One way possible way of encoding in inter mode is each for each non-key frame to be encoded with reference to the previously encoded and reconstructed non-key frame. Hence, for each non-key macro-block 13b, the best match 15 is found in the reference frame, subtracted from the current macro-block and the newly formed residue is then DCT transformed, entropy encoded, packetised and sent to buffer B2. This is the case when for example an encoder such as H.263 is used.

For a better prediction, multiple-reference frames can be used as in standard H.264. In order to find the best match 15 for the current non-key macro-block 13b, a number of references are checked, using a standard method. To find the best match in real-time the number of reference frames should be limited. When the best match is found, it is indexed by the non-key frame reference number and the offset in the reference frame. To speed up the process the following method is used:
- If the match is good enough, the current block can be skipped from encoding and the match is used for reconstruction. Only the match index need to be encoded including reference number and offset.
- If the match is marginally good, the match is used as prediction and the residue error between the current block and the match block is encoded.
- If the match is poor, the current block is encoded with no reference to the match block, being directly DCT transformed and entropy encoded.
- If in the whole non-key layer a large number of blocks have a poor match, the entire layer frame may be forced to be intra coded and sent without any reference.

Using this approach, the encoder 3 will always treat a key layer 11 in intra mode while a non-key layer 12 is mainly encoded inter mode, unless a large number of macro-blocks 13b, in the current non-key layer are significantly different in which case the whole non-key layer 12 is intra encoded.

For a more efficient compression, macro-blocks (key or non-key) 13a, 13b can have a flexible size such as 16x16, 16x8, etc 4x4 pixels as is the case accepted by the standard video coder H.264.

Once encoded, key and non-key macro-blocks 13 are immediately placed into packets P₁, P₂, Pₐ, P_{b},... and stored into corresponding buffer B1, B2 without waiting for the whole layer to be encoded. Also the packets P₁, P₂, Pₐ, P_{b},... are ready to be read out onto the network, if the network allows. Buffer B1 holds the packets P₁, P₂,... generated after encoding macro-blocks 13 in intra mode while B2 holds the packets Pₐ, P_{b},... generated after encoding macro-blocks 13 in inter mode.

Because in intra mode only the spatial redundancy within the picture is encoded, without reference to the temporal relationship to other frames, the packets P₁, P₂,... generated are large in size. Hence buffer B1 will accommodate larger sized packets than buffer B2. The shorter packets in buffer B2 can be transmitted when channel conditions are less than optimal, whilst the longer packets in buffer B1 require better conditions for safe transmission.

The buffers B1, B2 are filled independently, and read out independently according to estimated congestion on the internet The two buffers B1, B2 are read out via a switch 17 controlled by a decision block 16.

A buffer monitor BM1, BM2 exists for each buffer B1, B2 which monitors the level of buffer occupancy. Each monitor BM1, BM2 is capable of sending conditional message to the encoder 3 stating the condition of the buffer B1, B2 (e.g full, empty, ready to receive packets) in order to avoid situations such as overflow or underflow. Based on the signal received from the buffer monitoring devices BM1, BM2, the encoder 3 makes the choice between adopting intra 4 or inter 5 mode and therefore between reading from a key layer 4 or from a non-key layer.

The output is read out of B1 or B2 according to prevailing conditions on the Internet. If the conditions are bad, then buffer B2 may have to be read out while B1 is allowed to continue to fill. An example scenario is as shown in figure 6. When conditions on the network have changed to busy network, the decision block 16 will switch between reading from buffer B1 to reading from buffer B2. Then buffer monitor BM1 sends the message "STOP" to the encoder 3 which means that the input from a key layer 4 into the encoder 3 is stopped. Buffer monitor 2 BM2 simultaneously sends the message "START" to the encoder and a non-key layer 5 starts being encoded. The network NTW reads from buffer B2 until a new decision is made.

BM1 actively monitors buffer B1's level of occupancy and therefore checking if current B1 status is ok by permanently monitoring the number of packets P₁, P₂,... coming into the buffer B1 and the number of packets P₁, P₂,... going out of the buffer B1 into the network NTW. If this condition is correct, buffer monitor BM1 informs the encoder 3 to keep the decision of encoding in intra 4 mode and buffer B1 continues to fill. Otherwise, monitor BM1 activates the switch 17 via the decision block 16 and buffer monitor BM2 become active. This corresponds to the situation when buffer B1's level of occupancy is high because the network NTW is not available to accept large packets from buffer B1. Monitor BM2 is now actively monitoring buffer B2's level of occupancy and checking the current status of this buffer. If the current B2 status is ok, monitor BM2 informs the encoder 3 to encode in inter 5 mode, which means that the encoder 3 starts encoding a non-key layer frame. Buffer B2 continues to fill with packets Pₐ, P_{b},... encoded in inter mode until buffer B2's level of occupancy is high and monitor BM2 has to activate the switch via the decision block 16.

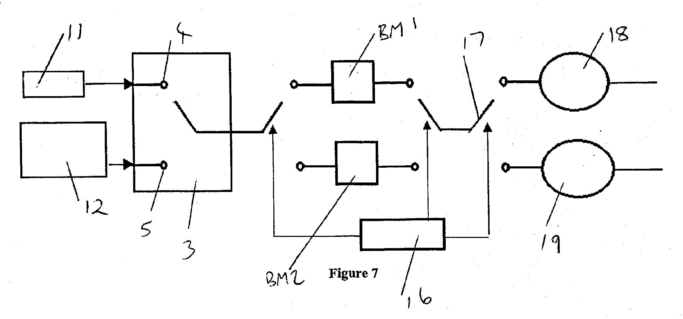

Alternatively, as shown in figure 7, a quality of service (QoS) multi-channel network may be used to minimize the packet loss and delay associated with interactive video. One channel will be a QoS guarantied channel 18 which means it has a very low packet loss rate. Typically these high quality channels represent a small fraction of the total bandwidth of the channel. For a multi-channel QoS approach to be effective, it is necessary for the video encoder to make encoding decisions that exploit the special nature of multi-channel QoS network. Hence, the compressed key 11 and non-key 12 layers are transported over separate channels 18, 19 as shown in figure 7.

A further alternative is to have two processors to effect simultaneous compression of macro-blocks 13 using both the inter and intra modes. The two streams of macro-blocks 13, corresponding to the key 11 and non-key 12 layers are sent to both encoding processors, so that each particular macro-block 13 yields two codewords, ⁿW_{INTRA} and ⁿW_{INTER}. All the packets of type ⁿW_{INTRA} are placed in buffer B1, and packets of type ⁿW_{INTER} are placed in buffer B2. At the peer terminal, packets of type ⁿW_{INTRA} are de-compressed using the inverse intra algorithm and packets of type ⁿW_{INTER} are de-compressed using the inverse inter algorithm.

For every macro-block 13 the sending stage can now choose between the two compressed data codewords. Thus the coded n^{th} macro-block is obtained by switching the output stream to read from B1 or B2, that decision being made solely on the basis of estimated prevailing congestion on the internet.

The present invention provides a system and method for fast communication of video data over a network such as the internet based on fast encoding as a result of using a "scheduled mode decision". Unlike conventional methods, the present invention attempts to implement neither an optimisation method for mode decision nor a speeding method for choosing one of the modes for encoding a macro-block. Instead it provides an alternative to mode decision, by identifying features that can be easily computed from the video data and are good indicators of which mode would be optimal, depending on the level of congestion on the network.

## Claims

1. A method of encoding video data in a real-time face-to-face communication system, the method comprising the steps of:
inputting a video data signal comprising frames of facial images;
classifying parts of a frame of the video data signal as key parts or non-key parts of a facial image to form a key group and a non-key group;
dividing each group into macro-blocks to form key macro-blocks and non-key macro-blocks;
for each key macro-block, performing key encoding, comprising encoding the key macro-block with reference to at least one macro-block only in said frame, to define encoded key data;
outputting the encoded key data;
for each non-key macro-bock, determining the amount of correlation between the non-key macro-block and at least one comparison macro-block in at least one preceding frame; and
if the amount of correlation is below a threshold correlation, performing first non-key encoding, comprising encoding the non-key macro-block with reference to at least one macro-block only in said frame, to define first encoded non-key data;
outputting the first encoded non-key data; or
if the amount of correlation is above the threshold correlation, performing second non-key encoding, comprising encoding the non-key macro-block with reference to its respective comparison macro-block, to define second encoded non-key data;
outputting the second encoded non-key data.

2. A method according to claim 1, wherein the key parts comprise data relating to eyes and mouth.

3. A method according to claim 1 or claim 2, wherein the size of the macro-blocks is at least one of 16x16, 16x8, 8x16, 8x8, 8x4, 4x8 or 4x4 pixels.

4. A method according to any of claims 1 to 3, further comprising the steps of:
monitoring the occupancy of a first buffer arranged to contain, in use, packets of the encoded data;
if the occupancy of the first buffer is below a first threshold occupancy, performing the key encoding or the first non-key encoding;
packetising the first encoded key data or the first encoded non-key data to define first packets;
inputting the first packets into the first buffer;
outputting the first packets from the first buffer into a network;
if the occupancy of the first buffer is above the first threshold occupancy, monitoring the occupancy of a second buffer arranged to contain, in use, packets of the encoded data;
if the occupancy of the second buffer is below a second threshold occupancy, performing the second non-key encoding;
packetising the second encoded non-key data to define second packets;
inputting the second packets into a second buffer;
outputting the second packets into the network; and
outputting the second packets from the second buffer into the network.

5. A method according to claim 4, wherein the network is a quality of service multi-channel network, the first packets are output into the network through a quality of service channel and the second packets are output into the network through a non quality of service channel.

6. An apparatus for encoding video data in a real-time face-to-face communication system, the apparatus comprising:
video data signal input means arranged to input, in use, frames of video data comprising facial images;
facial image classifying means arranged to classify, in use, parts of a frame of the video data signal as key parts or non-key parts of a facial image to form a key group and a non-key group;
macro-block division means arranged to divide, in use, each group into macro-blocks to form key macro-blocks and non-key macro-blocks;
an encoder arranged to encode, in use, the key and non-key macro-blocks to define encoded key and non-key data;
output means arranged to output, in use, the encoded key data and first and second encoded non-key data;
wherein for each key macro-block the encoder performs, in use, key encoding comprising encoding the key macro-block with reference to at least one macro-block only in said frame, to define encoded key data;
wherein for each non-key macro-bock, the encoder determines, in use, the amount of correlation between the non-key macro-block and a comparison macro-block in at least one preceding frame; and
if the amount of correlation is below a threshold correlation, the encoder performs, in use, first non-key encoding, comprising encoding the non-key macro-block with reference to at least one macro-block in said frame to form second encoded non-key data; or
if the amount of correlation is above the threshold correlation, the encoder performs, in use, second non-key encoding, comprising encoding the non-key macro-block with reference to its respective comparison macro-block only to define second encoded non-key data.

7. An apparatus according to claim 6, wherein the key parts comprise data relating to eyes and mouth.

8. An apparatus according to claim 6 or claim 7, wherein the size of the macro-blocks is at least one of 16x16, 16x8, 8x16, 8x8, 8x4, 4x8 or 4x4 pixels.

9. An apparatus according to any of claims 6 to 8, wherein the encoder comprises two encoding processors.

10. An apparatus according to any of claims 6 to 9, further comprising:
first and second buffers, each buffer arranged to contain, in use, packets of the encoded data;
a first monitor arranged to monitor, in use, the occupancy of the first buffer if the occupancy of the buffer is below a first threshold occupancy;
a packetiser arranged to packetise, in use, the encoded data to define packets;
first input means arranged to input, in use, first packets into the first buffer;
first output means arranged to output, in use, the first packets from the first buffer into a network;
a second monitor arranged to monitor, in use, the occupancy of the second buffer, if the occupancy of the first buffer is above the first threshold occupancy;
second input means arranged to input, in use, second packets into the second buffer;
second output means arranged to output, in use second packets from the second buffer into the network;
wherein if the occupancy of the first buffer is below the first threshold occupancy the encoder performs, in use, the key encoding or the first non-key encoding and if the occupancy of the first buffer is above the first threshold occupancy and the occupancy of the second buffer is below a second threshold occupancy the encoder performs, in use, the second non-key encoding.

11. An apparatus according to claim 10, further comprising a decision block arranged to control a switch between the first and second buffers.

12. An apparatus according to claim 10 or claim 11, wherein the network is a quality of service multi-channel network, the first packets are output into the network through a quality of service channel and the second packets are output into the network through a non quality of service channel.

13. A real-time face-to face communication system comprising a real-time face-to-face communication transmission system according to any of claims 10 to 12 and a receiver system comprising an analyser, a decoder and a display.
